Europäisches Patentamt

European Patent Office

Office européen des brevets

(11) Veröffentlichungsnummer: **0 175 138**
**B1**

(12) **EUROPÄISCHE PATENTSCHRIFT**

(45) Veröffentlichungstag der Patentschrift: 26.09.90

(21) Anmeldenummer: 85110075.0

(22) Anmeldetag: 10.08.85

(51) Int. Cl.⁵: **B 29 C 55/02**

(54) Verfahren und Anordnung zur Steuerung von Verfahrensparametern bei der Herstellung verstreckter Folien.

(30) Priorität: 18.08.84 DE 3430439

(43) Veröffentlichungstag der Anmeldung:
26.03.86 Patentblatt 86/13

(45) Bekanntmachung des Hinweises auf die
Patenterteilung:
26.09.90 Patentblatt 90/39

(84) Benannte Vertragsstaaten:
DE FR GB IT LU NL

(56) Entgegenhaltungen:
GB-A-2 052 049
US-A-3 930 167
US-A-3 974 248

(73) Patentinhaber: HOECHST
AKTIENGESELLSCHAFT
Postfach 80 03 20
D-6230 Frankfurt am Main 80 (DE)

(72) Erfinder: Gawrisch, Wolfgang, Dr. Dipl.-Phys.
Am Dalberger 10
D-6501 Gau-Bischofsheim (DE)

Courier Press, Leamington Spa, England.

**Beschreibung**

Die Erfindung betrifft ein Verfahren zur Steuerung von Verfahrensparametern bei der Herstellung verstreckter Folien zur Beeinflussung des Orientierungszustandes von Molekülketten in den Folien, bei dem Licht eine laufende Folienbahn durchstrahlt und optisch an der biaxial gestreckten Folienbahn gestreut wird, sowie eine Anordnung zur Durchführung des Verfahrens.

Eine solches Verfahren und eine derartige Anordnung sind aus der US-A-3 930 167 bekannt.

Bei der Herstellung von Filmen aus thermoplastischen Materialien wird das Polymergranulat mittels Extruder und Breitschlitzdüse zu einem Schmelzfilm geformt. Dieser erstarrt beim Kontakt mit Kühlwalzen zu einem Vorfilm, der dann mittels Streckaggregaten stufenweise oder simultan verstreckt wird. Dabei kommt es zu einer Orientierung der Molekülketten im Folienmaterial, die im wesentlichen durch den Streckprozess hervorgerufen wird. Üblicherweise erfolgt zunächst eine Längsstreckung in Maschinenrichtung und anschließend daran eine Breitstreckung in Quer- oder Transversalrichtung zu der Maschinenrichtung. Die Breitstreckung wird im allgemeinen in einem Rahmen durchgeführt. Nach Beendigung der Breitstreckung wird das Folienband einer Temperaturbehandlung unterzogen, durch die es zu einer Wärmefixierung der Orientierung der Molekülketten in der Folie kommt und somit zu einer Beibehaltung der Gestalt des Folienmaterials. Durch die Streckung entsteht eine teilkristalline und biaxial orientierte Folie. Die Orientierung innerhalb der Folie kann durch das Indexellipsoid, welches durch die Brechungsindizes $n1$, $n2$ und $n3$ aufgespannt wird, beschrieben werden. Entsprechend den vorhandenen Orientierungen der Molekülketten in der Folie ergeben sich in drei aufeinander senkrechten Achsenrichtungen unterschiedliche Brechungsindizes.

Aus der DE-A-30 01 881 ist ein Verfahren zur Analyse der Oberflächenbeschaffenheit von flexiblen Materialien, insbesondere von Folienbahnen, durch Erzeugung von Interferenzstreifen mittels eines schräg auf die zu untersuchende Oberfläche eines Meßobjekts gerichteten Lichtstrahls bekannt, wobei der Lichtstrahl zu einem Teil an der Oberfläche und zu einem anderen Teil an einer Referenzfläche reflektiert wird und durch Überlagerung der beiden Teilstrahlen ein dem von der Referenzfläche sich abhebenden Oberflächenprofil des Meßobjekts äquivalentes Interferenzfeld entsteht. Dieses wird zur Bestimmung der Ausdehnung des Oberflächenprofils in seiner Länge und Höhe mit Hilfe der Interferenzlinienabstände und der Wellenlänge des eingestrahlten Lichts ausgewertet. Das zu untersuchende Meßobjekt wird an die Referenzfläche unter vorbestimmter Zugspannung angelegt. Der auf die zu untersuchende Oberfläche gerichtete Lichtstrahl ist monochromatisch. Mit diesem Verfahren können Unebenheiten der Oberfläche von Folienbahnen leicht erkannt werden, wobei die Höhe jeder Unebenheit durch Auszählen der Anzahl der Interferenzringe bestimmt werden kann.

Aus der US-A-3,930,167 ist ein Verfahren bekannt, bei dem Laser-Beugungsmuster einer bewegten Folienbahn während der verschiedenen Verarbeitungs- bzw. Herstellungsstufen beobachtet werden, um möglichst frühzeitig festzustellen, ob eine Änderung in den Herstellungsparametern oder -variablen erforderlich ist, um sicherzustellen, daß ein Endprodukt entsprechend der vorgegebenen Spezifikationen hergestellt wird. Jeder Unterschied in der Beugung, einschließlich Veränderungen in der Intensität, Geometrie oder der Konfiguration, werden zum Steuern der verschiedenen Produkteinheiten oder der variablen Parameter herangezogen, wobei es sich um die Steuerung der Folienstreckmechanismen, der Wärme- und der Kühleinheiten handeln kann und ebenso um die Regelung von Preßwalzen oder -rollen, um die Dicke der Folie festzulegen. Dieses bekannte Verfahren beruht im wesentlichen auf einem Vergleich des Beugungsmusters eines Laserlichtstrahles, der eine Folie vorgegebener Spezifikationen durchstrahlt, mit dem Beugungsmuster des Laserlichtstrahles an einer In-line-produzierten Folie. Der Unterschied in den beiden Beugungsmustern wird zur Regelung verwendet, wodurch erreicht werden soll, daß der Istwert der Messung jeweils dem Sollwert angenähert wird. Eine Messung des optischen Anisotropiezustandes der Folienbahn, bei dem es sich um die Abweichung der Orientierung der Molekülketten von einer Vorzugsrichtung in Abhängigkeit von der Folienbreite handelt, ist nicht vorgesehen.

In der DE-A-32 43 719 ist eine laseroptische Anordnung zur Erzeugung von Streulicht-, Abschattungs- oder Reflexionssignalen von einzelnen, in einer Durchflußküvette strömenden Partikeln beschrieben, die von einem Fotodetektor über eine entsprechende Abbildungsoptik als zeitliche Spannungs/Stromfluktuationen registriert werden. Mit der laseroptischen Anordnung werden die zeitlich fluktuierenden Streulichtersignale von strömenden Partikeln und/oder Partikelverbänden erfaßt und ausgewertet. Dadurch ist die Möglichkeit gegeben, den Dispergiergrad in praxisgerechten Systemen innerhalb von Meßzeiten kleiner als 5 Sekunden signifikant zu erfassen und als Regelgröße zur Leistungssteigerung von Dispergier- bzw. Flockungsanlagen zu verwenden.

Bei biaxial orientierten Folien treten im allgemeinen, bedingt durch die Verfahrensparameter, unterschiedliche Orientierungszustände der Molekülketten in Längs- und Querrichtung auf. Insbesondere werden bei biaxial gestreckten Polyesterfolien in Längs- und Querrichtung optische Anisotropiezustände beobachtet, die durch eine Abweichung der Hauptorientierungsrichtung der Molekülketten in Abhängigkeit von der Folienbreite bedingt sind. So weisen zum Beispiel in Querrichtung der Folie die Randpartien andere Orientierungszustände auf als die Folienmitte. Die Abweichung in Abhängigkeit von der Folienbreite wird als BOWING oder BOW-Effekt bezeichnet, der bezogen auf die Folienbreite ein inhomogenes physikalisches Eigenschaftsbild der Folie bewirkt, das mitunter mit einer verminderten mechanischen Folienqualität verbunden sein kann.

Aufgabe der Erfindung ist es, ein Verfahren zur Herstellung von Folienbahnen gleichbleibender Qualität in Längs- und Querrichtung der biaxial gestreckten Folien anzugeben, das eine Analyse des Orientierungszustandes der Molekülketten gegenüber einer Haupt- bzw. Vorzugsrichtung ermöglicht.

Diese Aufgabe wird erfindungsgemäß dadurch gelöst, daß an zumindest zwei Meßstellen in Längs- und/oder Querrichtung die Folienbahn durchstrahlt wird, daß die Drehung der Streubilder der Meßstellen gegenüber einer Vorzugsorientierung der Molekülketten das Maß für die Änderung des Anisotropiezustandes der verstreckten Folienbahn bestimmt und zur Regelung der Temperatur eines Temperaturfeldes für die Wärmefixierung der Folienbahn herangezogen wird, um eine Vergleichmäßigung des Anisotropiezustandes an den Meßstellen gegenüber dem Anisotropiezustand in Vorzugsorientierung zu erhalten.

Die Erzeugung der Streubilder, die Bestimmung der Drehung der Streubilder und die Regelung der Temperatur des Temperaturfeldes erfolgen während der laufenden Herstellung der Folienbahn, d.h. das Verfahren ermöglicht eine on-line-Kontrolle und Steuerung der Qualität der biaxial gestreckten Folienbahn.

Das Verfahren wird zweckmäßigerweise so gestaltet, daß monochromatisches, polarisiertes Licht die Meßstellen der Folienbahn durchstrahlt, an den Molekülketten gestreut wird, daß der elektrische Feldstärkenvektor des Lichtes in einer senkrechten Ebene zur Schwingungsebene eines Analysators schwingt und die Intensität des aus dem Analysator austretenden polarisierten Lichtes gemessen wird. Bei einer abgewandelten Verfahrensweise liefert der Analysator Streubilder, die als Rasterbilder von einer Videokamera aufgenommen werden und deren Kontrast rechnerisch zur Bestimmung der Linien gleicher Intensität ausgewertet wird. Zweckmäßigerweise wird die Folienbahn mit monochromatischem polarisiertem Licht durchstrahlt, das an den Molekülketten gestreut wird, schwingt ferner der elektrische Feldstärkenvektor des Lichtes in einer senkrechten Ebene zur Schwingungsebene eines Analysators und wird die Intensität des aus dem Analysator austretenden polarisierten Lichtes gemessen. Die Streubilder der Folienbahn können ferner mit weißem Licht erzeugt werden.

Die Anordnung zur Durchführung des erfindungsgemäßen Verfahren weist eine Lichtquelle und Abbildungsoptik zum Durchstrahlen der Folienbahn und zum Erzeugen von Streubildern derselben und ein lichtempfindliches Element zum Bestimmen der Intensität des Meßstellen der Folienbahn durchsetzenden Lichtes auf und zeichnet sich dadurch aus, daß die Lichtquelle und ein Polarisator der Abbildungsoptik auf der einen Seite der Folienbahn und ein Analysator der Abbildungsoptik und das lichtempfindliche Element auf der anderen Seite der Folienbahn angeordnet sind und daß das lichtempfindliche Element mit einem Rechner zur Auswertung der Kontrastwerte der Streubilder verbunden ist. In Ausgestaltung der Anordnung sind der Polarisator und der Analysator Polarisationsprismen aus doppelbrechenden Kristallen; ferner kann es sich um dichroitische Folien in Gestalt von Polarisationsfiltern handeln. Das lichtempfindliche Element ist zweckmäßigerweise eine Fotozelle, mit der der Ort maximaler Helligkeit des einzelnen Streubildes bestimmbar ist. In einer anderen Ausgestaltung der Anordnung ist das lichtempfindliche Element eine Videokamera, die ein Rasterbild von dem Streubild liefert, und der Rechner ermittelt Linien gleicher Intensität und somit die Kontur über eine Kontrastauswertung des Rasterbildes.

Mit dem Verfahren und der Anordnung zur Durchführung des Verfahrens werden die Vorteile erzielt, daß der Orientierungszustand von biaxial gestreckten Folien im laufenden Herstellungsprozeß in der Weise analysiert werden kann, daß jede Drehung der Hauptorientierungsrichtung der Moleküle bzw. Molekülketten, bezogen auf eine Vorzugsrichtung, eine Drehung des Streubildes bewirkt, die gemessen, rechnerisch ausgewertet und als Regelgröße zur Steuerung von Verfahrensparametern, wie beispielsweise der Temperatur herangezogen wird. Indem die Meßwerte über die Orientierungen der Molekülketten für die Prozeßsteuerung verwendet werden, wobei die Änderung des Anisotropiezustandes der Folien über die Drehung des erzeugten Streubildes durch die Angabe des Ortes maximaler Helligkeit mit Hilfe lichtempfindlicher Bauelemente, wie Fotozelle oder Videokamera bestimmt wird, gelingt es, eine Gleichmäßigkeit der Orientierungen der Molekülketten zu erzielen.

Im folgenden wird das erfindungsgemäße Verfahren anhand eines Ausführungsbeispiels der Anordnung näher erläutert. Es zeigen:

Figur 1a) und 1b): schematisch den optischen Anisotropie- und den idealen Anisotropiezustand einer uniaxial und einer biaxial orientierten Folie;

Figur 2a) bis 2d): schematisch die Orientierung der Molekülketten in uniaxial und biaxial gestreckten Folien sowie Diagramme der optischen und mechanischen Eigenschaften in Abhängigkeit von der Folienbreite sowie der Drehung der Orientierungsrichtung der Molekülketten;

Figur 3: eine schematische Anordnung zur Bestimmung des Streubildes von Polyethylenterephthalat (PET)-Folien;

Figur 4: mit einer Videokamera aufgenommene Streubilder in Form von Rasterbildern, die gegenüber einer Hauptorientierungsrichtung gedreht sind;

Figur 5: ein Diagramm der Lichtintensität eines Streubildes, das von einer Fotozelle gemessen wird, in Abhängigkeit von der Drehung des Streubildes gegenüber einer Hauptorientierungsrichtung;

Figur 6: eine schematische Anordnung zur Bestimmung der optischen Anisotropie von orientierten Polyethylenfolien zur Steuerung des on-line Herstellungsprozesses für Folien;

Figur 7: ein Diagramm der optischen Anisotropie über die Folienbreite nach einer Querstreckung der Folie; und

Figur 8: ein Diagramm der optischen Anisotropie über die Folienbreite nach Regelung der Temperatur als Verfahrensparameter bei der Wärmefixierung der Folie im Anschluß an die Querstreckung.

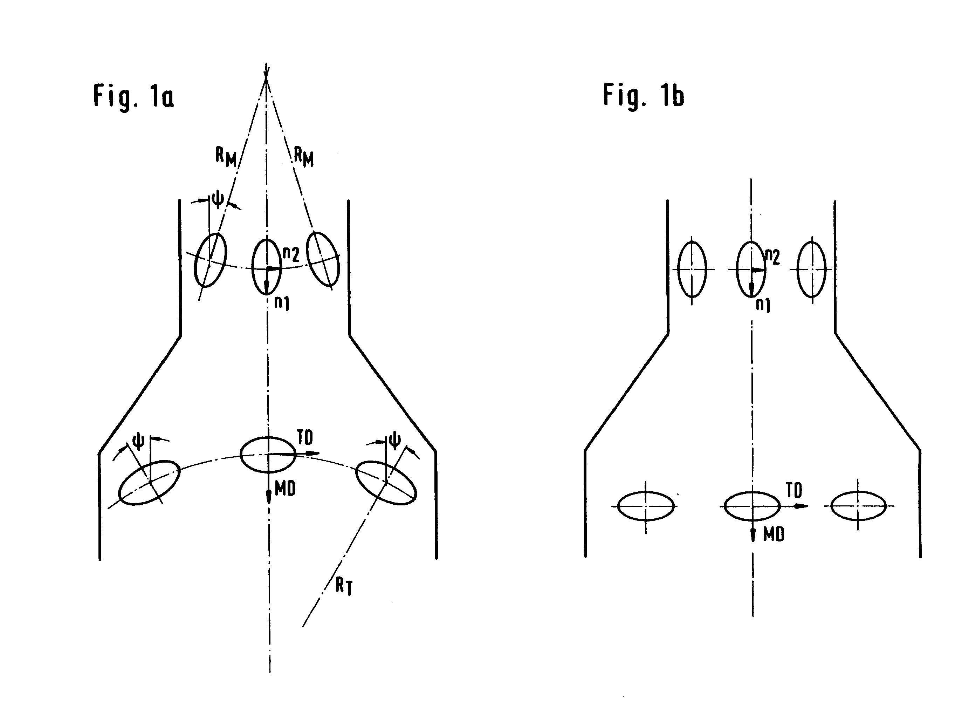

Anhand der Figuren 1a) und 1b) werden der in der Praxis auftretende und der angestrebte ideale Anisotropiezustand einer uniaxial und biaxial gestreckten Folienbahn erläutert. Wie Figur 1a) zeigt, treten im allgemeinen, bedingt durch die Verfahrensparameter, unterschiedliche Orientierungszustände in Längs- bzw. Maschinenrichtung (MD-Richtung) und Querrichtung (TD-Richtung) auf. Die in den Figuren 1a) und 1b) dargestellten Indexellipsen geben einen Querschnitt in der Folienbahn durch das sogenannte Indexellipsoid wieder, welches durch die unterschiedlichen Brechungsindizes n1, n2 und n3 in die drei aufeinander senkrechten Raumrichtungen aufgespannt wird.

Nach der Längsstreckung liegen die drei gezeigten Indexellipsen mit ihren kleinen Achsen im wesentlichen auf einem Umfangsabschnitt eines Kreises mit dem Radius $R_M$, und ihre großen Achsen verlaufen in Richtung der Radien $R_M$. Die große Achse der mittig in der Folienbahn liegenden Indexellipse fällt mit der MD-Richtung zusammen, welche die Hauptorientierungsrichtung bildet, während die großen Achsen der links und rechts davon befindlichen Indexellipsen mit den Richtungen der Radien $R_M$ zusammenfallen und mit der Hauptorientierungsrichtung einen Winkel ψ bilden, der um so größer ist, je weiter die einzelne Indexellipse von der Folienbahnmitte entfernt liegt.

Nach der Querstreckung sind die Indexellipsen so orientiert, daß ihre großen Achsen in etwa auf einem Umfangsabschnitt eines Kreises mit dem Radius $R_T$ bzw. tangential zu diesem Kreisumfang liegen, während die kleinen Achsen in Richtung der Radien $R_T$ ausgerichtet sind. In der Mitte der Folienbahn deckt sich die Richtung der kleinen Achse mit der Hauptorientierungsrichtung, während die kleinen Achsen der links und rechts von der Mitte befindlichen Indexellipsen von der Hauptorientierungsrichtung um einen Winkel ψ abweichen, der um so größer ist je näher die Indexellipse zu dem Rand der Folienbahn liegt. Die unterschiedlichen Orientierungen der Achsen bzw. ihre Abweichung von der Hauptorientierungsrichtung ergeben sich durch die Verarbeitung der Folienbahn. Die Längsstreckung der erwärmten Folienbahn erfolgt durch Streckaggregate, wie beispielsweise zwei Rollen, über welche die Folienbahn geführt ist und die mit unterschiedlichen Geschwindigkeiten laufen. Dabei ist der von den Rollen ausgeübte Zug über die Breite der Folienbahn nicht völlig gleichmäßig, sondern in der Mitte am größten, so daß es zu der Orientierung der Indexellipsen gemäß Figur 1a) kommt. Der Querstreckprozeß erfolgt in einem sogenannten Rahmen, in welchem Greifeinrichtungen, wie zum Beispiel Klemmen, die mit gleicher Geschwindigkeit wie die Folienbahn laufen, die beiden Ränder erfassen und sich quer zur Maschinenrichtung um einen bestimmten Betrag nach außen bewegen und anschließend in Maschinenrichtung durch die Querstreckzone laufen. In der Querstreckzone wird die Folienbahn im allgemeinen auf etwa 80°C bis 100°C erwärmt und durchläuft vor der Freigabe durch die Greifeinrichtungen ein Wärmefixierfeld mit einer Temperatur von etwa 180°C, das die Ausrichtung der Molekülketten in der Folienbahn nach den Streckvorgängen stabilisiert und fixiert und somit die Folienbahnform stabil macht. Auf die Ränder wird bei der Querstreckung im allgemeinen ein größerer Zug als auf die Mitte der Folienbahn ausgeübt, so daß es zu der in der Figur 1a) dargestellten Orientierung der Indexellipsen kommt. Die nach dem Querstreckprozeß, beispielsweise bei der Polyesterfolienherstellung beobachtete Abweichung der Molekülketten von der Hauptorientierungsrichtung in Abhängigkeit von der Folienbreite wird als optischer Anisotropiezustand, BOWING- oder BOW-Effekt bezeichnet.

Dieser BOW-Effekt ruft insbesondere bei hochorientierten Folien eine Anisotropie der mechanischen Eigenschaften hervor, die sich auf die Folienqualität und damit auf die Wirtschaftlichkeit des Folienprodukts negativ auswirkt.

Figur 1b) zeigt den anzustrebenden idealen Anisotropiezustand einer uniaxial und/oder biaxial orientierten Folienbahn, bei der alle Indexellipsen sowohl nach der Längs- als auch nach der Querstreckung keine Abweichungen ihrer großen bzw. kleinen Achsen von der Hauptorientierungsrichtung aufweisen und somit auch die Molekülketten in der Folienbahn von der Hauptorientierungsrichtung nicht abweichen.

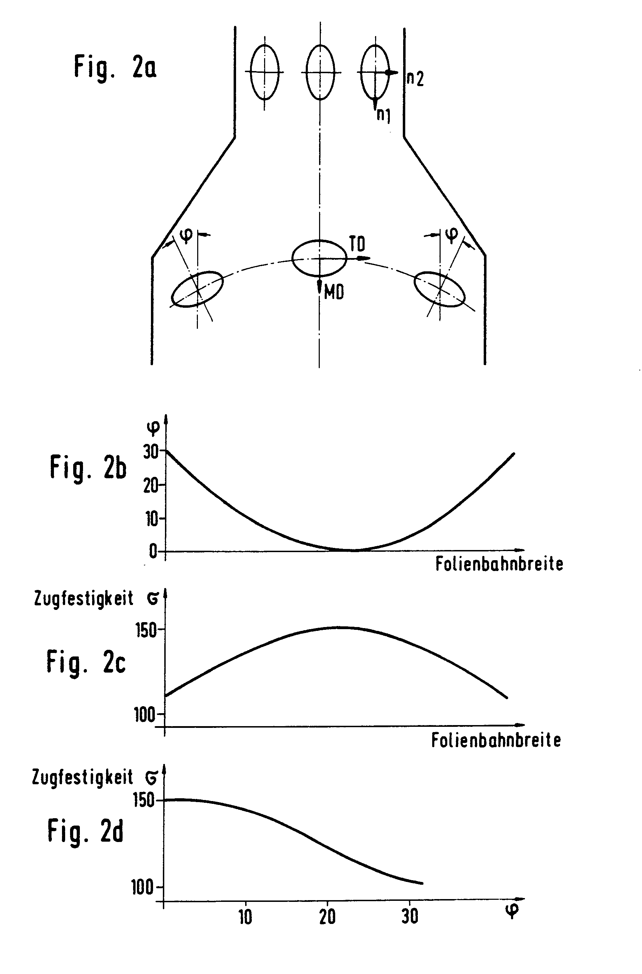

Die in der Figur 2a) gezeigten Indexellipsen für eine biaxial orientierte Folienbahn schließen mit ihren kleinen Achsen Winkel φ mit der Hauptorientierungsrichtung ein, wobei die Winkel φ die gleiche Bedeutung wie die Winkel ψ in Figur 1a) haben. In Figur 2b) ist, ausgehend von der Folienbahnmitte, jeweils links und rechts von dieser auf der Abszissenachse eine bestimmte Position der Folienbahn und auf der Ordinatenachse der zugehörige Winkel φ der Abweichung aufgetragen. Die Abweichung von der Hauptorientierungsrichtung beeinflußt die optischen Eigenschaften, d.h. die Brechungsindizes der Folienbahn. Die optischen Eigenschaften besitzen die in Figur 2c) dargestellte Korrelation zu mechanischen Eigenschaften der Folienbahn, wie beispielsweise zu der Zugfestigkeit σ, die über die Folienbahnbreite aufgetragen ist. Ausgehend von der Folienbahnmitte mit der maximalen Zugfestigkeit σ verringert sich diese zu den Rändern der Folienbahn hin. Aus den Figuren 2b) und 2c) ergibt sich Figur 2d), wenn anstelle der Folien-bahnbreite der Winkel φ auf der Abszissenachse und die Zugfestigkeit σ auf der Ordinatenachse aufgetragen werden. Aus dem Diagramm der Figur 2d) ist ersichtlich, daß mit größer werdender Abweichung von der Hauptorientierungsrichtung, ausgedrückt durch den Winkel φ, die Zugfestigkeit σ abnimmt, d.h. daß die Folienqualität verschlechtert wird.

Es zeigt sich, daß auf Grund der Bestimmung des optischen Anisotropiezustandes der Folienbahn eine Aussage über die Qualität der Folienbahn möglich ist.

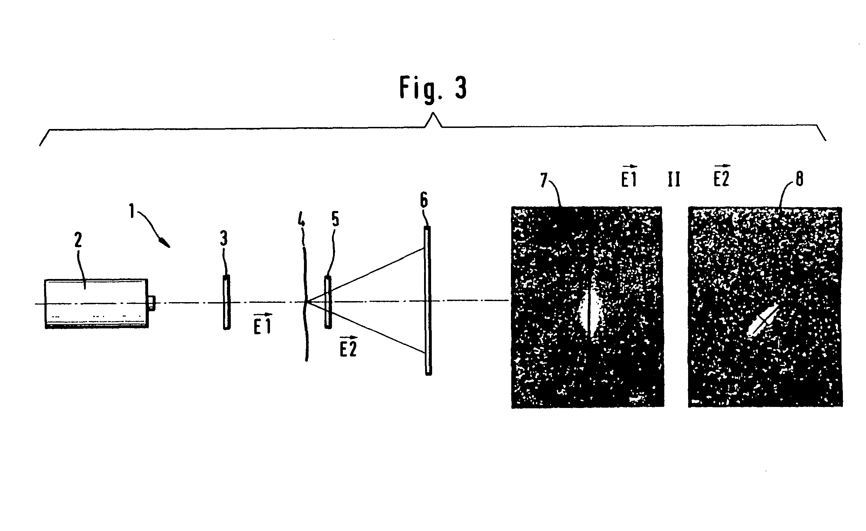

Anhand von Figur 3 wird der grundsätzliche Aufbau einer Anordnung 1 zur Analyse von Lichtstreubildern 7 und 8 zur Bestimmung des optischen Anisotropiezustandes einer laufenden Folienbahn 4 beschrieben.

Der Strahl einer Lichtquelle 2, beispielsweise eines Lasers oder einer herkömmlichen polychromatischen bzw. weißen Lichtquelle, durchstrahlt einen Polarisator 3 und trifft auf die zu untersuchende, laufende Folienbahn 4 auf und wird an den Molekülen bzw. Molekülketten der Folienbahn gestreut. Sobald der Lichtstrahl auf die Folienbahn fällt, geht von jedem Molekül bzw. jeder Molekülkette eine Sekundärwelle aus, die je nach der Größe und der optischen Beschaffenheit des Moleküls eine charakteristische Richtungsverteilung hat. Ganz allgemein versteht man unter Lichtstreuung die Erzeugung sekundärer Lichtwellen beim Auftreffen einer primären Lichtwelle auf Materie. Ein in Richtung des Lichtstrahls hinter der Folienbahn 4 angeordneter Analysator 5 hat eine Schwingungsebene parallel zur Schwingungsebene des elektrischen Feldvektors $\vec{E1}$ vor der Folienbahn 4. Nach der Streuung an der Folienbahn 4 bezeichnet $\vec{E2}$ den elektrischen Feldvektor des aus der Folienbahn 4 austretenden Lichtstrahls. Durch den Analysator 5 wird auf einer Mattscheibe 6 ein sogenanntes Vv-Streubild 7 erzeugt. Erfolgt eine Querstreckung der Folienbahn 4, wie sie anhand der Figuren 1a) und 2a) beschrieben wurde, so dreht sich die Orientierung der Moleküle in der Folienbahn 4, bezogen auf die Hauptorientierungsrichtung und verursacht dadurch eine Drehung des Vv-Streubildes 7 in die durch die Ziffer 8 gekennzeichnete Lage. Als Polarisator 3 und Analysator 5 finden an und für sich bekannte Polarisationsprismen aus doppelbrechenden Kristallen Verwendung. Bevorzugt werden Polarisationsfilter für den Polarisator 3 und den Analysator 5 verwendet, bei denen es sich um dichroitische Folien aus Cellulosehydrat oder Polyvinylalkohol handelt, die mit Färbemittel dichroitisch gemacht werden. Durch geeignete Wahl des Färbemittels kann der Dichroismus in das jeweils gewünschte Spektralgebiet verlegt werden.

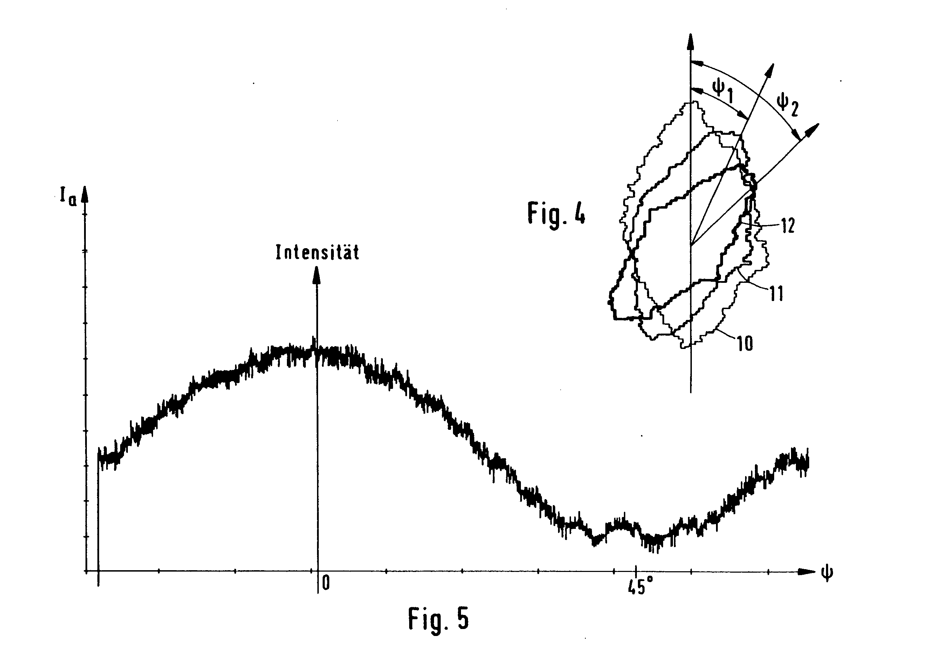

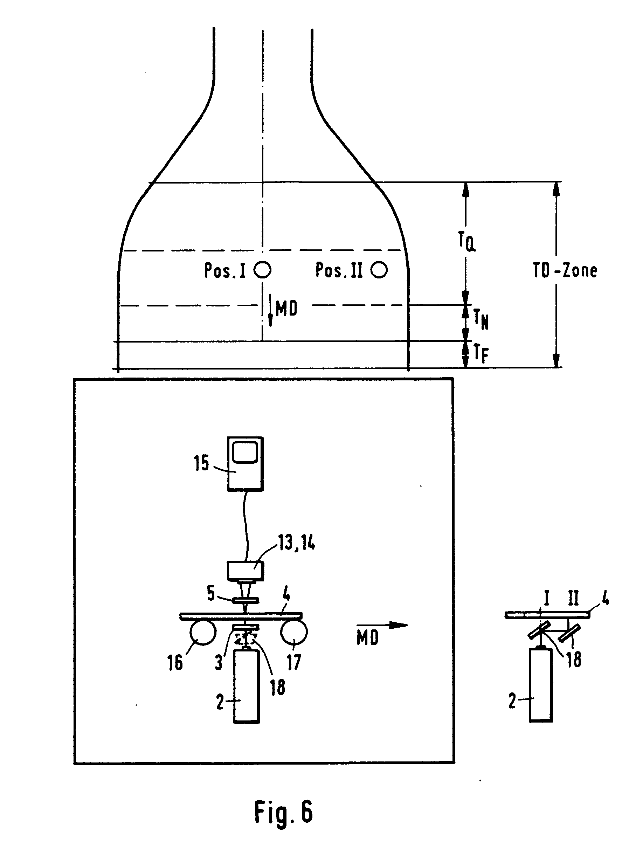

Die Auswertung der Drehung des Vv-Streubildes 7 in die Lage des Vv-Streubildes 8 kann mit Hilfe eines lichtempfindlichen Elements, wie beispielsweise eine Fotozelle oder ein Videokamera erfolgen, die jeweils an die Stelle der Mattscheibe 6 in der Anordnung 1 treten. Wie in Figur 4 schematisch dargestellt ist, liefert eine Videokamera Streubilder 10, 11, 12 einer biaxial gestreckten Folienbahn. Das Streubild 10 ergibt sich, wenn der Lichtstrahl die Folienbahn in der Mitte durchsetzt, während die Streubilder 11 und 12 gegenüber der Hauptorientierungsrichtung um die Winkel ψ₁ bzw. ψ₂ verdreht sind, d.h. von Positionen auf der Folienbahn geliefert werden, die zwischen der Mittellinie und dem einen Rand der Folienbahn liegen. Die Streubilder 10, 11, 12 bzw. Rasterbilder werden durch die Kontrastauswertung der Bilder der Videokamera erhalten, wobei die Konturen der einzelnen Rasterbilder die Linien gleicher Lichtintensität festlegen und mittels eines Rechners ermittelt werden, wie noch anhand von Figur 6 erläutert werden wird.

Figur 5 zeigt die mit einer Fotozelle gemessene, durch eine biaxial orientierte Folienbahn hin-durchtretende Lichtintensität Ia über dem Winkel ψ der Drehung des Streubildes gegenüber einer Hauptorientierungsrichtung. Durch die Angabe des Ortes maximaler Helligkeit, d.h. der stärksten Intensität Ia, wird zunächst die Hauptorientie-rungsrichtung der Folienbahn bestimmt. Dies geschieht in der Weise, daß der Lichtstrahl der Lichtquelle die Folienbahn in der Mitte senkrecht durchstrahlt und die Eintrittsöffnung der Fotozelle in der gleichen Ebene wie der Lichtstrahl, senkrecht auf die Folienbahn, angeordnet ist. Durch geeignete Umlenkeinrichtungen wird der Lichtstrahl dann auf eine Position der Folienbahn gelenkt, die zwischen der Mitte und dem einen Rand liegt und die Lichtintensität des an dieser position durch die Folienbahn hindurchtretenden Lichtstrahls mit Hilfe der Fotozelle, die ihre ursprüngliche Lage beibehält, gemessen. Diese Intensität ist wegen der Drehung der Moleküle gegenüber der Hauptorientierungsrichtung kleiner als die zuvor gemessene Intensität Ia, und der zu dieser Intensität gehörende Winkel ψ in dem Diagramm nach Figur 5 gibt die Drehung des Streubildes gegenüber der Hauptorientierungsrichtung an. Die Ermittlung des Drehwinkels der Hauptachse kann somit entweder auf Grund der Intensitätsanalyse der mit einer Fotozelle gemessenen Helligkeit oder direkt aus der Drehung des Rasterbildes einer Videokamera erfolgen. Eine weitere Möglichkeit der Bestimmung des Drehwinkels ergibt sich aus einer Kompensationsmethode, die darin besteht, das bei Überschreiten eines Soll-Wertes durch eine gemessene Streubilddrehung der Polarisator und der Analysator in der Anordnung 1 nach Figur 3 in die gleiche Richtung über angesteuerte Stellmotoren so lange gedreht werden, bis das gedrehte Streubild mit dem Streubild der Ausgangsstellung bzw. der Anfangsmessung zusammenfällt, d.h. kompensiert ist. Der optische Anisotropiezustand der Folienbahn wird dann direkt aus der erforderlichen Drehung des Analysators bzw. Polarisators für die Kompensation zwischen dem ursprünglichen Streubild und dem gedrehten Streubild ermittelt.

Die Meßwerte, welche die Drehungen der Streubilder gegenüber der Hauptorientierungsrichtung wiedergeben, werden bei der Folienherstellung im on-line-Betrieb zur Steuerung eines Temperaturfeldes herangezogen, wie anhand von Figur 6 beschrieben wird. Bei der schematisch dargestellten biaxial verstreckten Polyethylenfolienbahn sind zwei Meßpositionen I und II angedeutet, die von einem Lichtstrahl einer Lichtquelle unterhalb der Folienbahn durchstrahlt werden. Oberhalb der Folienbahn 4, den Meßpositionen gegenüberliegend, sind Detektoren 13 bzw. 14 als lichtempfindliche Elemente angeordnet. Die Bezugszahl 13 bezeichnet eine Fotozelle und die Bezugszahl 14 eine Videokamera. Die Querstreckzone oder TD-Zone ist beispielsweise in drei Temperaturfelder unterteilt, ein Temperaturfeld $T_Q$ für Querstreckung mit einer Temperatur von etwa 80°C bis 100°C, ein Neutralfeld $T_N$ von 100°C bis 120°C und ein Wärmefixierfeld $T_F$ von etwa 180°C. Die Polyethylenfolienbahn 4 läuft in MD-Richtung über Rollen 16, 17 und wird von der Lichtquelle 2 von unten in den Positionen I (Folienmitte) und II (Folienrand) durchstrahlt. Falls die Lichtquelle 2 ein Laser ist, der bekannterweise eine monochromatische Strahlung abgibt, kann der Meßstrahl über ein gestrichelt angedeutetes Spiegelsystem 18 nahezu an jede beliebige Stelle der Folienbahn 4 gelenkt werden, so auch aus der Position I in die Position II, die bei der Anordnung nach Figur 6 in einer senkrechten Ebene zur Blattebene liegt.

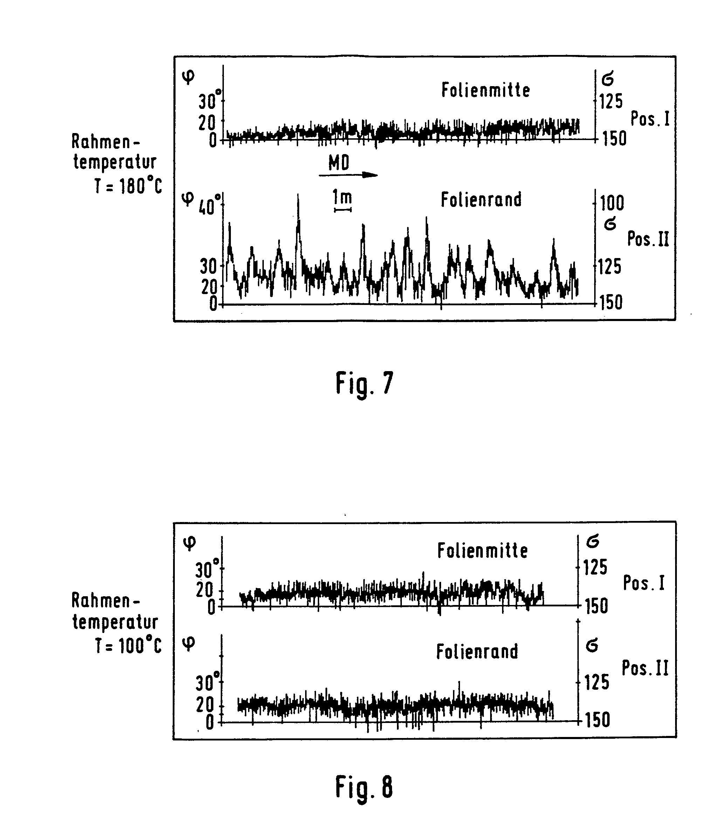

Mit einer Videokamera 14 als lichtempfindliches Element, die an einen Rechner 15 mit Druckwerk angeschlossen ist, werden die in Figur 7 im Diagramm abgebildeten Meßergebnisse erhalten, die in Position II am Folienbahnrand sehr starke Anisotropieschwankungen zeigen, wenn an das Temperaturfeld $T_Q$ unmittelbar das Wärmefixierfeld $T_F$ in der Querstreckzone anschließt, d.h. ein Neutralfeld $T_N$ nicht vorhanden ist. Mit den Anisotropieschwankungen gehen Schwankungen der mechanischen Eigenschaften einher.

Die den Anisotropieschwankungen entsprechenden Meßwerte, die bei einer Rahmentemperatur von etwa 180°C gemessen werden, finden zur Steuerung des Querstreckens und zum Wärmefixieren der Folienbahn in der Weise Anwendung, daß das zuvor erwähnte Neutralfeld mit einer Rahmentemperatur von 100°C bis 120°C als Temperaturfeld zwischen dem Temperaturfeld $T_Q$ und dem Wärmefixierfeld $T_F$ betrieben wird. Das Diagramm in Figur 8 zeigt den optischen Anisotropiezustand, der dann im Bereich der Position II, dem Bereich des Folienbahnrandes, erhalten wird und der gegenüber dem Anisotropiezustand nach Figur 7 sehr stark vergleichmäßigt ist und bei dem somit die mechanischen Eigenschaften der Folienbahn deutlich verbessert sind.

Die dem Anisotropiezustand nach Figur 7 entsprechenden Meßwerte können auch zur Steuerung eines weiteren Verfahrensparameters, nämlich der Transportgeschwindigkeit der Folienbahn in der Querstreckzone und/oder beim Längsstrecken, verwendet werden. Ebenso ist eine gleichzeitige Steuerung sowohl des Neutralfeldes $T_N$ als auch der Transportgeschwindigkeit der Folienbahn in der Querstreckzone und/oder beim Längsstrecken möglich.

**Patentansprüche**

1. Verfahren zur Steuerung von Verfahrensparametern bei der Herstellung verstreckter Folien zur Beeinflussung des Orientierungszustandes von Molekülketten in den Folien, bei dem Licht eine laufende Folienbahn durchstrahlt und optisch an der biaxial gestreckten Folienbahn gestreut wird, dadurch gekennzeichnet, daß an zumindest zwei Meßstellen in Längs- und/oder Querrichtung die Folienbahn durchstrahlt wird, daß die Drehung der Streubilder der Meßstellen gegenüber einer Vorzugsorientierung der Molekülketten als Maß für die Änderung des Anisotropiezustandes der verstreckten Folienbahn bestimmt und zur Regelung der Temperatur eines Temperaturfeldes für die Wärmefixierung der Folienbahn herangezogen wird, um eine Vergleichmäßigung des Anisotropiezustandes an den Meßstellen gegenüber dem Anisotropiezustand in Vorzugsorientierung zu erhalten.

2. Verfahren nach Anspruch 1, dadurch gekennzeichnet, daß die Erzeugung der Streubilder, die Bestimmung der Drehung der Streubilder und die Regelung der Temperatur des Temperaturfeldes während der laufenden Herstellung der Folienbahn erfolgen.

3. Verfahren nach Anspruch 1, dadurch gekennzeichnet, daß monochromatisches, polarisiertes Licht die Meßstellen der Folienbahn durchstrahlt und an ihnen gestreut wird, daß der elektrische Feldstärkenvektor des Lichtes in einer Ebene parallel zur Schwingungsebene eines Analysators schwingt und daß die Intensität des aus dem Analysator austretenden Lichtes gemessen wird.

4. Verfahren nach Anspruch 1, dadurch gekennzeichnet, daß von den Meßstellen der Folienbahn gestreutes monochromatisches, polarisiertes Licht einen Analysator durchsetzt, dessen Schwingungsebene parallel zur Schwingungsebene des einfallenden Lichtes ist, wobei das polarisierte Licht Streubilder liefert, die als Rasterbilder von einer Videokamera aufgenommen werden und daß eine rechnerische Kontrastauswertung der Rasterbilder zur Bestimmung der Linien gleicher Intensität vorgenommen wird.

5. Verfahren nach Anspruch 1, dadurch gekennzeichnet, daß monochromatisches, polarisiertes Licht die Meßstellender Folienbahn durchstrahlt, an den Molekülketten gestreut wird, daß der elektrische Feldstärkenvektor des Lichtes in einer senkrechten Ebene zur Schwingungsebene eines Analysators schwingt und die Intensität des aus dem Analysator austretenden polarisierten Lichtes gemessen wird.

6. Verfahren nach den Ansprüchen 1 und 2, dadurch gekennzeichnet, daß die Lichtquelle zum Erzeugen der Streubilder der Meßstellen der Folienbahn eine polychromatische Lichtquelle ist.

7. Anordnung zur Durchführung des Verfahrens nach einem oder mehreren der Ansprüche 1 bis 6, mit einer Lichtquelle und Abbildungsoptik zum Durchstrahlen der Folienbahn und zum Erzeugen von Streubildern derselben und mit einem lichtempfindlichen Element zum Bestimmen der Intensität des Meßstellen der Folienbahn durchsetzenden Lichtes, dadurch gekennzeichnet, daß die Lichtquelle (2) und ein Polarisator (3) der Abbildungsoptik auf der einen Seite der Folienbahn (4) und ein Analysator (5) der Abbildungsoptik und das lichtempfindliche Element (13; 14) auf der anderen Seite der Folienbahn (4) angeordnet sind und daß das lichtempfindliche Element (13; 14) mit einem Rechner (15) zur Auswertung der Kontrastwerte der Streubilder verbunden ist.

8. Anordnung nach Anspruch 7, dadurch gekennzeichnet, daß der Polarisator (3) und der Analysator (5) Polarisationsprismen aus doppelbrechenden Kristallen sind.

9. Anordnung nach Anspruch 7, dadurch gekennzeichnet, daß der Polarisator (3) und der Analysator (5) dichroitische Folien in Gestalt von Polarisationsfiltern sind.

10. Anordnung nach Anspruch 7, dadurch gekennzeichnet, daß das lichtempfindliche Element aus einer Fotozelle (13) besteht, mit der der Ort maximaler Helligkeit des einzelnen Streubildes bestimmbar ist.

11. Anordnung nach Anspruch 7, dadurch gekennzeichnet, daß das lichtempfindliche Element eine Videokamera (14) ist, die ein Rasterbild von dem Streubild liefert und daß der Rechner (15) Linien gleicher Intensität und somit die Kontur über eine Kontrastauswertung des Rasterbildes ermittelt.

12. Anordnung nach Anspruch 7, dadurch gekennzeichnet, daß die Lichtquelle (2) ein Laser ist, dessen monochromatischer Lichtstrahl über ein Spiegelsystem (18) an jede beliebige Meßstelle (I; II) der Folienbahn (4) lenkbar ist.

13. Anordnung nach den Ansprüchen 7 bis 9, dadurch gekennzeichnet, daß der Polarisator (3) und der Analysator (5) zueinander gekreuzt sind und daß die Lichtquelle (2) eine polychromatische Lichtquelle ist.

14. Anordnung nach den Ansprüchen 7 bis 9, dadurch gekennzeichnet, daß der Polaristor (3) und der Analysator (5) parallel zueinander gestellt sind und daß die Lichtquelle (2) eine polychromatische Lichtquelle ist.

**Revendications**

1. Procédé pour commander des paramètres d'opérations lors de la fabrication de feuilles étirées, de manière à influencer l'état d'orientation de chaînes de molécules dans les feuilles, et selon lequel une lumière traverse une bande continue formée par la feuille et est diffusée optiquement au niveau de la bande formée par la feuille étirée biaxialement, caractérisé en ce que la bande formée par la feuille est traversée en au moins deux emplacements de mesure dans la direction longitudinale et/ou dans la direction transversale, que la rotation des images diffuses des points de mesure par rapport à une orientation préférentielle des chaînes de molécules est déterminée en tant que mesure de la modification de l'état d'anisotropie de la bande formée par la feuille étirée et est utilisée pour régler la température d'un champ de température pour le fixage thermique de la bande formée par le feuille, afin d'obtenir une uniformisation de l'état d'anisotropie aux emplacements de mesure par rapport à l'état d'anisotropie dans l'orientation préférentielle.

2. Procédé selon la revendication 1, caractérisé en ce que la production des images diffuses la détermination de la rotation des images diffuses et la régulation de la température du champ de température sont réalisées au cours de la fabrication de la bande formée par la feuille.

3. Procédé selon la revendication 1, caractérisé en ce qu'une lumière monochromatique polarisée traverse les emplacements de mesure de la bande formée par la feuille et est diffusée en ces emplacements, que le vecteur de l'intensité de champ électrique de la lumière oscille dans un plan parallèle au plan d'oscillation d'un analyseur et qu'on mesure l'intensité de la lumière sortant de l'analyseur.

4. Procédé selon la revendication 1, caractérisé en ce que la lumière monochromatique polarisée, diffusée par les emplacements de mesure de la bande formée par la feuille traverse un analyseur, dont le plan d'oscillation est parallèle au plan d'oscillation de la lumière incidente, la lumière polarisée fournissant des images diffuses, qui sont enregistrées par une caméra vidéo sous la forme d'images tramées, et qu'une évaluation par calcul du contraste des images tramées est réalisée pour la détermination des lignes de même intensité.

5. Procédé selon la revendication 1, caractérisé en ce que la lumière monochromatique polarisée traverse les emplacements de mesure de la bande formée par la feuille et est diffusée au niveau des chaînes de molécules, que le vecteur d'intensité de champ électrique de la lumière oscille dans un plan perpendiculaire au plan d'oscillation d'un analyseur et qu'on mesure l'intensité de la lumière polarisée sortant de l'analyseur.

6. Procédé selon les revendications 1 et 2, caractérisé en ce que la source de lumière servant à produire les images diffuses des emplacements de mesure de la bande formée par la feuille est une source de lumière polychromatique.

7. Dispositif pour la mise en oeuvre du procédé selon une ou plusieurs des revendications 1 à 6, comportant une source de lumière et un système optique de formation d'images pour envoyer un rayonnement à travers la bande formée par la feuille et produire des images diffuses de cette bande, et un élément photosensible servant à déterminer l'intensité de la lumière transmise au niveau d'emplacements de mesure de la bande formée par la feuille, caractérisé en ce que la source de lumière (2) et un polariseur (3) du système optique de formation d'images sont disposés d'un côté de la bande formée par la feuille (4) et qu'un analyseur (5) du système optique de formation d'images et l'élément photosensible (13; 14) sont disposés de l'autre côté de la bande (4), et que l'élément photosensible (13; 14) est relié à un calculateur (15) servant à évaluer les valeurs du contraste des images diffuses.

8. Dispositif selon la revendication 7, caractérisé en ce que le polariseur (3) et l'analyseur (5) sont des prismes de polarisation formés de cristaux biréfringents.

9. Dispositif selon la revendication 7, caractérisé en ce que le polariseur (3) et l'analyseur (5) sont des feuilles dichroïques se présentant sous la forme de filtres de polarisation.

10. Dispositif selon la revendication 7, caractérisé en ce que l'élément photosensible est constituée par une cellule photoélectrique (13), avec laquelle peut être déterminé l'emplacement de la luminosité maximale de l'image diffuse individuelle.

11. Dispositif selon la revendication 7, caractérisé en ce que l'élément photosensible est une caméra vidéo (14), qui fournit une image tramée à partir de l'image diffuse et que le calculateur (15) détermine des lignes de même intensité ainsi que le contour au moyen d'une évaluation du contraste de l'image tramée.

12. Dispositif selon la revendication 7, caractérisé en ce que la source de lumière (2) est un laser, dont le faisceau de lumière monochromatique peut être dévié par l'intermédiaire d'un système de miroirs (18) en n'importe quel emplacement de mesure (I; II) de la bande formée par la feuille (4).

13. Dispositif selon les revendications 7 à 9, caractérisé en ce que le polariseur (3) et l'analyseur (5) sont croisés l'un par rapport à l'autre et que la source de lumière (2) est une source de lumière polychromatique.

14. Dispositif selon les revendications 7 à 9, caractérisé en ce que le polariseur (3) et l'analyseur (5) sont disposés parallèles l'un à l'autre et que la source de lumière (2) est une source de lumière polychromatique.

**Claims**

1. A process for the control of process parameters in the production of stretched films for the purpose of influencing the orientation condition of molecule chains in the films, using light which passes through a moving film web and is optically scattered on the biaxially stretched film web, wherein light passes through the film web in at least two measuring positions in the longitudinal and/or transverse direction, the rotation of the scatter patterns of the measuring positions, relative to a preferred orientation of the molecule chains, is determined as a measure of the change of the anisotropy condition of the stretched film web and is utilized to regulate the temperature of a temperature field for the thermal fixing of the film web, in order to achieve uniformity of the anisotropy condition at the measuring positions, relative to the anisotropy condition in the preferred orientation.

2. The process according to claim 1, wherein the generation of the scatter patterns, the determination of the rotation of the scatter patterns and the regulation of the temperature of the temperature field take place while the production of the film web is in progress.

3. The process according to claim 1, wherein monochromatic polarized light passes through the measuring positions of the film web and is scattered thereat, the electric field strength vector of the light oscillates in a plane parallel to the plane of oscillation of an analyzer, and the intensity of the light emerging from the analyzer is measured.

4. The process according to claim 1, wherein monochromatic polarized light scattered by the measuring positions of the film web passes through an analyzer, the plane of oscillation of which is parallel to the plane of oscillation of the incident light, the polarised light providing scatter patterns which are recorded as raster patterns by a video camera, and an arithmetic evaluation of the contrast of the raster patterns is undertaken in order to determine the lines of equal intensity.

5. The process according to claim 1, wherein monochromatic polarized light passes through the measuring positions of the film web and is scattered at the molecule chains, the electric field strength vector of the light oscillates in a plane perpendicular to the plane of oscillation of an analyzer and the intensity of the polarized light emerging from the analyzer is measured.

6. The process according to claims 1 and 2, wherein the light source for the generation of the scatter patterns of the measuring positions of the film web is a polychromatic light source.

7. An arrangement for carrying out the process according to one or more of claims 1 to 6, with a light source and an optical imaging system to irradiate the film web and to generate scatter patterns of the same and with a light sensitive element for the determination of the intensity of the light passing through the measuring positions of the film web, wherein the light source (2) and a polarizer (3) of the optical imaging system are disposed on one side of the film web (4) and an analyzer (5) of the optical imaging system and the light-sensitive element (13; 14) are disposed on the other side of the film web (4), and the light-sensitive element (13; 14) is connected to a computer (15) for the evaluation of the contrast values of the scatter patterns.

8. The arrangement according to claim 7, wherein the polarizer (3) and the analyzer (5) are polarizing prisms of birefringent crystals.

9. The arrangement according to claim 7, wherein the polarizer (3) and the analyzer (5) are dichroic films designed as polarizing filters.

10. The arrangement according to claim 7, wherein the light-sensitive element consists of a photo-cell (13) with which the location of maximum brightness of the individual scatter pattern can be determined.

11. The arrangement according to claim 7, wherein the light-sensitive element is a video camera (14) which provides a raster pattern of the scatter pattern, and the computer (15) determines lines of equal intensity and thus the contour by evaluation of the contrast of the raster pattern.

12. The arrangement according to claim 7, wherein the light source (2) is a laser, the monochromatic light beam of which can be directed via a mirror system (18) to any selectable measuring position (I; II) of the film web (4).

13. The arrangement according to claims 7 to 9, wherein the polarizer (3) and the analyzer (5) are crossed in relation to one another, and the light source (2) is a polychromatic light source.

14. The arrangement according to claims 7 to 9, wherein the polarizer (3) and the analyzer (5) are set parallel to one another, and the light source (2) is a polychromatic light source.

EP  0 175 138  B1

Fig. 1b

Fig. 1a

1

Fig. 2a

Fig. 2b

Folienbahnbreite

Zugfestigkeit σ

Fig. 2c

Folienbahnbreite

Zugfestigkeit σ

Fig. 2d

2

## Fig. 3

Fig. 4

12

11

10

$\psi_1$ $\psi_2$

$I_a$

Intensität

0 45° $\psi$

Fig. 5

EP 0 175 138 B1

Fig. 6

Fig. 7

Fig. 8